(19) **Europäisches Patentamt European Patent Office Office européen des brevets**

(11) **EP 1 407 292 B1**

(12) **FASCICULE DE BREVET EUROPEEN**

(45) Date de publication et mention
de la délivrance du brevet:
**24.01.2007 Bulletin 2007/04**

(51) Int Cl.:
*G01S 15/89* (2006.01)   *G10K 11/34* (2006.01)

(21) Numéro de dépôt: **02762536.7**

(22) Date de dépôt: **05.07.2002**

(86) Numéro de dépôt international:
**PCT/FR2002/002369**

(87) Numéro de publication internationale:
**WO 2003/008998 (30.01.2003 Gazette 2003/05)**

(54) **SONAR D'IMAGERIE ET SYSTEME DE DETECTION UTILISANT UN TEL SONAR**

BILDERZEUGUNGS- SONAR UND DETEKTIONSSYTEM MIT VERWENDUNG EINES SOLCHEN SONARS

IMAGING SONAR AND A DETECTION SYSTEM USING ONE SUCH SONAR

(84) Etats contractants désignés:
**AT BE BG CH CY CZ DE DK EE ES FI FR GB GR IE IT LI LU MC NL PT SE SK TR**

(30) Priorité: **13.07.2001 FR 0109405**

(43) Date de publication de la demande:
**14.04.2004 Bulletin 2004/16**

(73) Titulaire: **Thales**
**92526 Neuilly Sur Seine (FR)**

(72) Inventeur: **GUTHMANN, Pierre,**
**Thales Intellectual Property**
**94117 Arcueil Cedex (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
**EP-A- 1 085 497**          **FR-A- 2 509 869**
**US-A- 4 493 064**         **US-A- 5 287 330**
**US-A- 6 160 756**

• **JAFFE J S: "Sensors for underwater robot vision: status and prospects" PROCEEDINGS OF THE INTERNATIONAL CONFERENCE ON ROBOTICS AND AUTOMATION SACRAMENTO, APR. 9 - 11, 1991, LOS ALAMITOS, IEEE COMP. SOC. PRESS, US, vol. 2 CONF. 7, 9 avril 1991 (1991-04-09), pages 2759-2766, XP010024147 ISBN: 0-8186-2163-X**

**Description**

La présente invention se rapporte aux sonars à haute résolution utilisés pour effectuer de l'imagerie sous-marine. Elle concerne plus particulièrement, les moyens sonar permettant de repérer des objets enfouis dans les couches sédimentaires. Elle concerne aussi des systèmes de détection utilisant un tel sonar monté sur un véhicule sous-marin autopropulsé.

Dans ce domaine on connaît la technique consistant à remorquer un poisson équipé de moyens sonar fonctionnant en mode paramétrique, c'est-à-dire par émission de deux fréquences hautes, typiquement de l'ordre de la centaine de kHz, et réception à la fréquence inférieure de battement. Cette technique est par exemple connue du brevet français n° 2 509 869 déposé le 17.07.1981 par la société SINTRA-ALCATEL, sous le n° 81 213 961.

Cette technique présente un inconvénient important liée au mode paramétrique, qui est une perte de rendement d'environ 30 à 40 dB.

Dans le brevet US 6,160 ,756 déposé le 15.06.1998 par la société GUIGNE International Ltd et publié le 12.12.2000, il est décrit un système d'imagerie des fonds marins au moyen d'un sonar fonctionnant aussi en mode paramétrique et conçu pour évoluer lentement près du fond en insonifiant celui-ci à la verticale. L'antenne est notamment montée sur un véhicule à chenilles se déplaçant sur le fond de la mer. Cette technique présenté l'inconvénient d'avoir un faible intercept tout en nécessitant un nombre important de transducteurs, l'antenne étant plane suivant 2 dimensions.

Pour pallier à ces inconvénients, l'invention se rapporte à un sonar d'imagerie pour détecter un objet immergé, enfoui dans un milieu réverbérant les ondes sonores le milieu réverbérant comportant une surface formant une interface avec le milieu d'immersion. Selon l'invention, ce sonar comporte des moyens d'émission et des moyens de réception, les moyens d'émission étant adaptés à former un diagramme d'émission présentant une zone angulaire à insonification réduite couvrant la zone de l'interface susceptible de réverbérer un écho reçu par les moyens de réception, en même temps que l'écho provenant de l'objet à détecter.

Selon une autre caractéristique, la réception est effectuée sur la fréquence d'émission.

Selon une autre caractéristique, les signaux d'émission de l'antenne d'émission sont pondérés en phase et en amplitude pour obtenir la zone à insonification réduite.

Selon une autre caractéristique, les transducteurs formant l'antenne d'émission sont groupés pour former des macrocapteurs pour obtenir la zone à insonification réduite.

Selon une autre caractéristique, il comprend des moyens pour rendre programmable l'angle de dépointage en site des faisceaux d'émission et de réception.

Selon une autre caractéristique, l'antenne d'émission comprend au moins 3 facettes pour obtenir un intercept large.

Selon une autre caractéristique, la fréquence d'émission est comprise entre 100 et 200 KHz.

Selon une autre caractéristique, il est adapté pour l'imagerie des fonds sous-marins et le milieu absorbant est un sédiment sous-marin.

Selon une autre caractéristique, il peut fonctionner selon deux modes en fonction de la nature du fond sous-marin.

L'invention propose en outre un système d'imagerie des fonds marins monté en frontal sur un véhicule autopropulsé et dont l'angle d'inclinaison en site du plan des deux antennes est variable pour être adapté à la nature des sédiments rencontrés.

D'autres particularités et avantages de l'invention apparaitront clairement dans la description suivante, présentée à titre d'exemple non limitatif en regard des figures annexées qui représentent :

- la figure 1, une vue en perspective du système d'antennes et des faisceaux de rayonnement associés :

- la figure 2, un diagramme de rayonnement de l'antenne d'émission; et
- la figure 3, un exemple de réalisation de l'antenne d'émission.

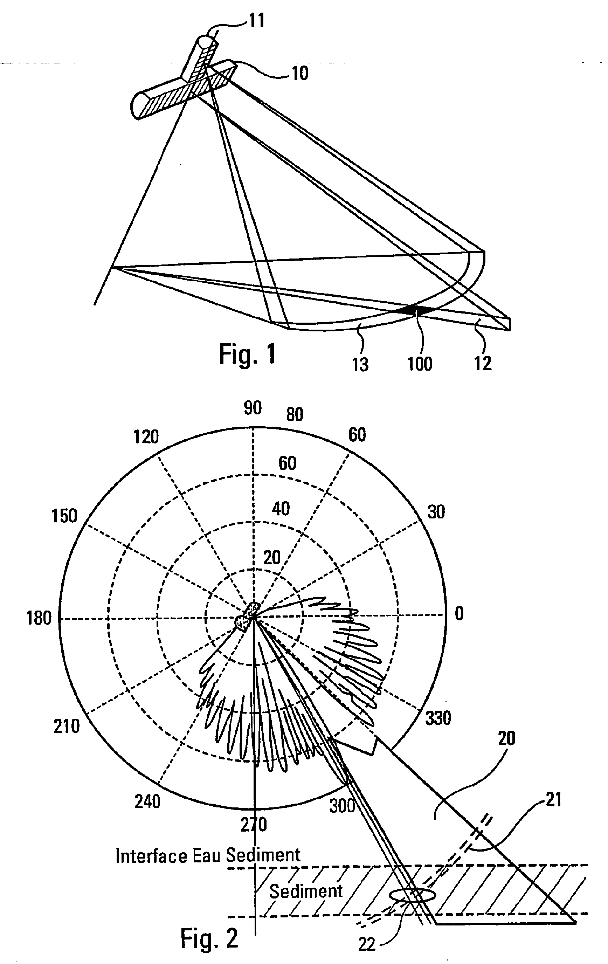

Le système d'antennes représenté sur la figure 1 comprend une antenne de réception horizontale 10 et une antenne d'émission "verticale" 11 (en fait inclinée par rapport à la verticale). Chaque antenne comporte des transducteurs de même type permettant d'émettre et de recevoir sur une large bande de fréquence, soit plusieurs dizaines kHz. Un tel transducteur est par exemple décrit dans le brevet n° 2 722 355 déposé par la société THOMSON-CSF le 08.07.1994 sous le n° 94 08 474.

Cet ensemble forme une croix dite de "Mills" qui détermine, pour une direction donnée, une tache d'observation 100 à l'intersection des faisceaux d'émission 13 et de réception 12.

Le plan formé par les deux antennes est incliné vers le fond de la mer, ce qui permet d'insonifier ce fond en oblique.

Selon une caractéristique essentielle de l'invention, on forme dans le faisceau d'émission 12 une voie en site telle que sa directivité permette d'obtenir une zone à insonification réduite.

Dans le diagramme d'émission du faisceau 12 représenté sur la figure 2, cette zone est repérée en 20 et on a représenté l'impulsion émise 21 arrivant au niveau de l'objet enfoui 22. L'écho qui correspond à l'interface eau-sédiment arrive au même instant que celui qui correspond à l'objet, entraînant un effet de masquage qui est rédhibitoire en l'absence de cette zone 20. Il en est de même pour les couches sédimentaires situées entre l'objet et l'interface. La zone à insonification réduite 20 permet alors d'atténuer fortement ce masquage.

Pour obtenir cette zone, l'invention consiste à créer un "zéro" dans la direction de l'écho de fond. Ceci est obtenu en dissymétrisant la directivité en site et rendant dépointable la direction de la voie.

A titre d'exemple de réalisation, l'antenne d'émission en site est formée de 48 transducteurs espacés de $\dfrac{\lambda}{2}$

à la fréquence centrale d'émission de 150 kHz, soit 5 mm. L'antenne est réalisée en 2 modules comportant chacun 24 transducteurs.

Suivant une réalisation préférée de l'invention, les signaux des émetteurs (amplificateurs) sont pondérés en amplitude et en phase. Suivant un exemple de réalisation les valeurs des pondérations en amplitude et en phase sont données par le tableau suivant :

| Numéro émetteur | Amplitude | Phase ° | Numéro émetteur | Amplitude | Phase ° |
|---|---|---|---|---|---|
| 1 | 0,65 | -167,5 | 26 | 0 | 0 |
| 2 | 0,25 | -59,2 | 27 | 0,985 | 1,8 |
| 3 | 0,47 | -51,4 | 28 | 0,853 | 3,4 |
| 4 | 0,422 | -64,4 | 29 | 0,699 | 4,4 |
| 5 | 0,281 | -73,8 | 30 | 0,561 | 5,5 |
| 6 | 0,18 | -55,8 | 31 | 0,472 | 8,8 |
| 7 | 0,245 | -25,9 | 32 | 0,454 | 14,8 |
| 8 | 0,369 | -24,3 | 33 | 0,498 | 20,2 |
| 9 | 0,44 | -31,2 | 34 | 0,560 | 22 |
| 10 | 0,432 | -38,5 | 35 | 0,588 | 20,8 |
| 11 | 0,372 | -41,8 | 36 | 0,552 | 18,2 |
| 12 | 0,319 | -35,8 | 37 | 0,462 | 16,4 |
| 13 | 0,34 | -23 | 38 | 0,362 | 19,6 |
| 14 | 0,432 | -16,4 | 39 | 0,315 | 30,7 |
| 15 | 0,535 | -16,8 | 40 | 0,352 | 40,4 |
| 16 | 0,589 | -19,8 | 41 | 0,423 | 40,2 |
| 17 | 0,574 | -22,3 | 42 | 0,456 | 34,1 |
| 18 | 0,508 | -22,3 | 43 | 0,408 | 26,1 |
| 19 | 0,446 | -17,6 | 44 | 0,282 | 21,6 |
| 20 | 0,448 | -9,8 | 45 | 0,160 | 41,1 |
| 21 | 0,539 | -4,7 | 46 | 0,220 | 76,7 |
| 22 | 0,691 | -3,6 | 47 | 0,394 | 69 |
| 23 | 0,862 | -4 | 48 | 0,548 | 50,8 |
| 24 | 1 | -3,7 | 49 | 0,509 | 32,9 |
| 25 | 0 | 0 | 50 | 0,904 | 168,7 |

On ne forme qu'une voie à chaque émission, mais sa direction peut être modifiée de manière connue par dépointage électronique, par exemple de $\pm$ 20° autour de la direction de consigne.

Suivant une variante de réalisation, on crée un " zéro" dans une direction donnée en formant des macrocapteurs sans pondérer les signaux des émetteurs. Par exemple, pour obtenir un zéro dans la direction 14,5°, on groupe les transducteurs par 8, ce qui forme les premiers zéros de la directivité du macrocapteurs à $\pm$ 14.5° pour $d = \dfrac{\lambda}{2}$. La directivité des macrocapteurs pondère la directivité de l'antenne en donnant une zone d'insonification réduite.

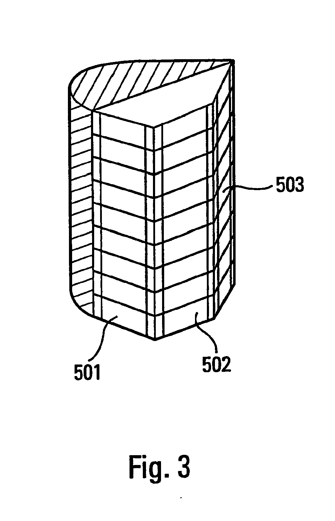

Dans une réalisation préférée, l'antenne d'émission est composée de 3 facettes, comme représentée sur la figure 3. De cette manière, on dispose selon l'invention de 2 modes de fonctionnement :

- un mode en intercept étroit, faible altitude
- un mode en intercept large, altitude plus grande.

Dans le mode intercept étroit, l'émission est faite à partir de la seule facette centrale 502. On réduit ainsi le champ insonifié et donc la réverbération. Avec les valeurs de l'exemple décrit ci-dessus, on obtient un champ de 20° avec une largeur l = 30 mm environ. Ce mode est utilisé pour des fonds marins formés de sédiments présumés fortement réverbérants (des sables par exemple). Dans ce cas on émet dans une voie à angle de site de l'ordre de 70°, c'est-à-dire avec un angle de rasance élevé, de manière à favoriser la pénétration dans les sédiments. L'émission et la réception sont effectuées alternativement, l'émission n + 1 n'intervenant qu'à l'issue de la réception n.

Dans le mode intercept large, l'émission est faire à partir des trois facettes 501,502,503 pour couvrir un champ horizontal de 60°. On effectue les trois émissions successivement avant l'arrivée des premiers signaux de réception. Ce mode est utilisé pour des fonds moins réverbérants (de la vase par exemple), et dans ce cas on émet dans une voie à angle de site de l'ordre de 40°.

Un système de détection selon l'invention comprend un véhicule autopropulsé équipé sur l'avant d'un sonar frontal, dont les antennes sont telles que représentées sur la figure 1. Le plan des 2 antennes 10 et 11 est, suivant le mode qui est utilisé, incliné de 20° ou de 50° par rapport à la verticale.

Suivant un exemple d'application, en mode intercept étroit, le véhicule évolue à la vitesse de 4 noeuds près du fond soit 4 mètres. On obtient alors une durée de récurrence d'émission d'environ 10 ms, soit n = 25 émissions successives pour une cible de 50 cm de longueur dans le sens de l'avancement. Le gain obtenu par intégration à chaque récurrence permet d'améliorer le rapport signal à bruit d'environ 8 à 9 dB dans une hypothèse de gain en $\sqrt{n}$. La faible altitude, rendue possible par l'utilisation d'un véhicule autonome, diminue les pertes par propagation (divergence et absorption). Par exemple on gagne une vingtaine de dB en réduisant l'altitude de 15 m à 4m. Dans cet exemple on atteint alors une couverture horaire d'environ 1 ha.

En mode intercept large, le véhicule évoluant à une altitude de 15 mètres et toujours à la vitesse de 4 Noeuds, la couverture horaire est d'environ1 ha.

Bien entendu, il peut s'avérer intéressant sur terrain difficile de fonctionner en intercept large et de réduire la vitesse de progression, les contraintes dues à la précision de navigation étant moindres.

La configuration des antennes en croix peut être inversée sans sortir du cadre de l'invention, l'antenne verticale étant placée vers le bas.

**Revendications**

1. Sonar d'imagerie, pour détecter un objet immergé, enfoui dans un milieu réverbérant les ondes sonores, comportant des moyens d'émission (11) et des moyens de réception (10), **caractérisé en ce que**, le milieu réverbérant comportant une surface formant une interface avec le milieu d'immersion, les moyens d'émission sont adaptés à former un diagramme d'émission présentant une zone angulaire à insonification réduite (20) couvrant la zone de l'interface susceptible de réverbérer un écho reçu par les moyens de réception, en même temps que l'écho provenant de l'objet à détecter (22).

2. Sonar d'imagerie selon l'une des revendications 1 à 2, dans lequel la zone angulaire à insonification réduite peut être dépointée.

3. Sonar d'imagerie selon l'une des revendications 1 à 3, dans lequel les moyens d'émission comportent une antenne sensiblement verticale et les moyens de réception comportent une antenne horizontale, les deux antennes formant une croix de "Mills".

**4.** Sonar d'imagerie selon l'une quelconque des revendications précédentes, dans lequel les moyens d'émission forment un diagramme présentent une dissymétrie en site.

**5.** Sonar d'imagerie selon l'une quelconque des revendications précédentes, dans lequel la réception est effectuée sur la fréquence d'émission.

**6.** Sonar d'imagerie selon l'une quelconque des revendications précédentes, dans lequel les signaux d'émission de l'antenne d'émission (11) sont pondérés en phase et en amplitude pour obtenir la zone à insonification réduite (20).

**7.** Sonar d'imagerie selon l'une quelconque des revendications 1 à 5, dans lequel les transducteurs formant l'antenne d'émission (11) sont groupés pour former des macrocapteurs pour obtenir la zone à insonification réduite (20).

**8.** Sonar d'imagerie selon l'une quelconque des revendications précédentes, comprenant des moyens pour rendre programmable l'angle de dépointage en site des faisceaux d'émission et de réception.

**9.** Sonar d'imagerie, selon l'une quelconque des revendications 1 à 6, **caractérisé en ce que** la fréquence d'émission est comprise entre 100 et 200 KHz.

**10.** Sonar d'imagerie, selon l'une quelconque des revendications 1 à 5, **caractérisé en ce que** l'antenne d'émission (11) comprend au moins 3 facettes (501-503) pour obtenir un intercept large.

**11.** Sonar d'imagerie selon l'une quelconque des revendications 1 à 10, adapté pour l'imagerie des fonds sous-marins et que le milieu absorbant est un sédiment sous-marin.

**12.** Sonar d'imagerie selon la revendication 11 comportant deux modes de fonctionnement, le mode utilisé étant adapté la nature du fond sous-marin.

**13.** Système d'imagerie des fonds marins, **caractérisé en ce qu'**il comporte un sonar selon l'une quelconque des revendications précédentes, monté en frontal sur un véhicule autopropulsé et dont l'angle d'inclinaison en site du plan des deux antennes (10,11) est variable pour être adapté à la nature des sédiments rencontrés.

**Claims**

**1.** Imaging sonar, for detecting a submerged object, buried in an environment reflecting the sound waves, comprising transmission means (11) and reception means (10), **characterized in that**, the reflecting environment comprising a surface area forming an interface with the submersion environment, the transmission means are adapted to form a transmission diagram presenting an angular area with reduced insonification (20) covering the area of the interface likely to reflect an echo received by the reception means, at the same time as the echo originating from the object to be detected (22).

**2.** Imaging sonar according to Claim 1, in which the angular area with reduced insonification can be misaligned.

**3.** Imaging sonar according to one of Claims 1 to 2, in which the transmission means comprise a roughly vertical antenna and the reception means comprise a horizontal antenna, the two antennas forming a "Mills" cross.

**4.** Imaging sonar according to any one of the preceding claims, in which the transmission means form a diagram presenting a dissymmetry elevation-wise.

**5.** Imaging sonar according to any one of the preceding claims, in which the reception takes place on the transmission frequency.

**6.** Imaging sonar according to any one of the preceding claims, in which the transmission signals from the transmit antenna (11) are weighted phase-wise and amplitude-wise to obtain the area with reduced insonification (20).

**7.** Imaging sonar according to any one of Claims 1 to 5, in which the transducers forming the transmit antenna (11) are grouped to form macrosensors to obtain the area with reduced insonification (20).

**8.** Imaging sonar according to any one of the preceding claims, comprising means for making programmable the angle of misalignment elevation-wise of the transmit and receive beams.

**9.** Imaging sonar, according to any one of Claims 1 to 6, **characterized in that** the transmission frequency is between 100 and 200 kHz.

**10.** Imaging sonar, according to any one of Claims 1 to 5, **characterized in that** the transmit antenna (11) comprises at least three facets (501-503) to obtain a wide intercept.

**11.** Imaging sonar according to any one of Claims 1 to 10, suitable for sea-bed imaging where the absorbent environment is a submarine sediment.

**12.** Imaging sonar according to Claim 11, comprising two operating modes, the mode used being suited to the nature of the sea-bed.

**13.** Sea-bed imaging system, **characterized in that** it comprises a sonar according to any one of the preceding claims, front-mounted on a self-propelled vehicle and of which the elevation-wise angle of inclination of the plane of the two antennas (10, 11) is variable to be suited to the nature of the sediments encountered.

**Patentansprüche**

**1.** Bilderzeugungs-Sonar zur Erfassung eines eingetauchten Gegenstands, der in einer die Schallwellen zurückstrahlenden Umgebung vergraben ist, mit Sendemitteln (11) und mit Empfangsmitteln (10), **dadurch gekennzeichnet, dass** die zurückstrahlende Umgebung eine Fläche aufweist, die eine Trennfläche mit der Eintauchumgebung bildet und die Sendemittel ausgelegt sind, um ein Sendediagramm zu bilden, das eine Winkelzone mit reduzierter Beschallung (20) aufweist, die die Zone der Trennfläche abdeckt, die ein von den Empfangsmitteln empfangenes Echo gleichzeitig mit dem Echo zurückstrahlen kann, das von dem zu erfassenden Gegenstand (22) kommt.

**2.** Bilderzeugungs-Sonar nach Anspruch 1, bei dem die Winkelzone mit reduzierter Beschallung abgelenkt sein kann.

**3.** Bilderzeugungs-Sonar nach einem der Ansprüche 1 und 2, bei dem die Sendemittel eine im Wesentlichen senkrechte Antenne aufweisen, und die Empfangsmittel eine waagrechte Antenne aufweisen, wobei die beiden Antennen ein "Mills Cross" bilden.

**4.** Bilderzeugungs-Sonar nach einem der vorhergehenden Ansprüche, bei dem die Sendemittel ein Diagramm bilden, das eine Elevationswinkel-Asymmetrie aufweist.

**5.** Bilderzeugungs-Sonar nach einem der vorhergehenden Ansprüche, bei dem der Empfang auf der Sendefrequenz ausgeführt wird.

**6.** Bilderzeugungs-Sonar nach einem der vorhergehenden Ansprüche, bei dem die Sendesignale der Sendeantenne (11) in Phase und Amplitude gewichtet werden, um die Zone mit reduzierter Beschallung (20) zu erhalten.

**7.** Bilderzeugungs-Sonar nach einem der Ansprüche 1 bis 5, bei dem die die Sendeantenne (11) bildenden Wandler zur Bildung von Makrosensoren gruppiert werden, um die Zone mit reduzierter Beschallung (20) zu erhalten.

**8.** Bilderzeugungs-Sonar nach einem der vorhergehenden Ansprüche, der Mittel aufweist, um den Elevations-Ablenkwinkel der Sende- und Empfangsstrahlen programmierbar zu machen.

**9.** Bilderzeugungs-Sonar nach einem der Ansprüche 1 bis 6, **dadurch gekennzeichnet, dass** die Sendefrequenz zwischen 100 und 200 kHz liegt.

**10.** Bilderzeugungs-Sonar nach einem der Ansprüche 1 bis 5, **dadurch gekennzeichnet, dass** die Sendeantenne (11) mindestens 3 Facetten (501-503) aufweist, um ein breites Interzept zu erhalten.

**11.** Bilderzeugungs-Sonar nach einem der Ansprüche 1 bis 10, der für die Bilderzeugung der Meeresböden ausgelegt ist, und dass die absorbierende Umgebung ein Meeresboden-Sediment ist.

**12.** Bilderzeugungs-Sonar nach Anspruch 11, der zwei Betriebsmodi aufweist, wobei der verwendete Modus an die Beschaffenheit des Meeresbodens angepasst ist.

**13.** Bilderzeugungssystem des Meeresbodens, **dadurch gekennzeichnet, dass** es einen Sonar nach einem der vorhergehenden Ansprüche aufweist, der frontal an einem selbstangetriebenen Fahrzeug montiert ist und dessen Elevations-Neigungswinkel der Ebene der beiden Antennen (10, 11) variabel ist, um an die Beschaffenheit der angetroffenen Sedimente angepasst zu werden.

Fig. 1

11

10

13  100  12

90  80
120  60
60
150  40
20
180  0
30
210  330
240  300
270

Interface Eau Sediment

Sediment

20
21
22

Fig. 2

503

501

502

Fig. 3